(19) Europäisches Patentamt

European Patent Office

Office européen des brevets

(11) **EP 2 880 623 B1**

(12) **FASCICULE DE BREVET EUROPEEN**

(45) Date de publication et mention de la délivrance du brevet:
**14.12.2016 Bulletin 2016/50**

(21) Numéro de dépôt: **13758933.9**

(22) Date de dépôt: **05.08.2013**

(51) Int Cl.:
***G06T 3/40*** (2006.01)

(86) Numéro de dépôt international:
**PCT/FR2013/051885**

(87) Numéro de publication internationale:
**WO 2014/023904 (13.02.2014 Gazette 2014/07)**

(54) **PROCEDE ET DISPOSITIF POUR LA RECONSTRUCTION D'IMAGES A SUPER-RESOLUTION**

VERFAHREN UND VORRICHTUNG ZUR REKONSTRUKTION HOCHAUFLÖSENDER BILDER

METHOD AND DEVICE FOR RECONSTRUCTING SUPER-RESOLUTION IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.08.2012 FR 1257632**

(43) Date de publication de la demande:
**10.06.2015 Bulletin 2015/24**

(73) Titulaire: **Commissariat à l'Energie Atomique et aux Energies Alternatives
75015 Paris (FR)**

(72) Inventeurs:
 • **DUPRET, Antoine
  F-91400 Orsay (FR)**
 • **ALACOQUE, Laurent
  F-38340 Voreppe (FR)**
 • **HO PHUOC, Tien
  F-38000 Grenoble (FR)**

(74) Mandataire: **Thibon, Laurent
 Cabinet Beaumont
 1, rue Champollion
 38000 Grenoble (FR)**

(56) Documents cités:
 **EP-A2- 1 860 875     WO-A1-2011/092696
 US-A1- 2009 110 285     US-B1- 6 937 774**

 • **HARRIS C ET AL: "A COMBINED CORNER AND EDGE DETECTOR", ALVEY VISION CONFERENCE. PROCEEDINGS OF THE ALVEY VISIONCONFERENCE, 1 janvier 1988 (1988-01-01), pages 147-151, XP001155775,**
 • **FREEMAN W T ET AL: "Example-based super-resolution", IEEE COMPUTER GRAPHICS AND APPLICATIONS, IEEE SERVICE CENTER, NEW YORK, NY, US, vol. 22, no. 2, 1 mars 2003 (2003-03-01), pages 56-65, XP002386972,**

**Description**

<u>Domaine</u>

La présente invention concerne un procédé et un dispositif pour réaliser une reconstruction d'image à super-résolution, et en particulier un procédé et un dispositif pour générer une image à super-résolution à partir d'une ou plusieurs images à faible résolution.

<u>Arrière-plan</u>

Il est souvent souhaitable d'augmenter la résolution d'une image. Par exemple, certains imageurs, comme des imageurs térahertz (THz), à infrarouges (IR) ou à faible coût peuvent capturer des images à faible résolution. En augmentant la résolution d'une ou plusieurs des images à faible résolution, on peut améliorer la qualité des images.

Une image à super-résolution peut être reconstruite à partir d'une pluralité d'images à faible résolution d'une même scène. Par exemple, les images peuvent correspondre à une séquence de trames d'un flux vidéo capturé par un imageur. En combinant les informations visuelles provenant de multiples images, la quantité totale d'informations visuelles peut être augmentée dans l'image à super-résolution. En effet, puisque chaque image à faible résolution est d'une certaine façon différente des autres, elle contribue à certaines informations uniques qui sont absentes dans les autres images.

Un procédé de génération d'une image à super-résolution sur la base de multiples images à faible résolution implique en général de sur-échantillonner l'une des images à faible résolution, puis de modifier les valeurs de pixel de l'image sur-échantillonnée sur la base des valeurs de pixel prises dans les images à faible résolution.

Cependant, il y a un problème technique pour sélectionner de façon précise les valeurs de pixel à utiliser pour cette modification de pixels. En effet, les valeurs de pixels sélectionnées doivent correspondre à des pixels ayant des positions dans leurs images respectives qui concordent avec précision avec la position du pixel à ajuster. Toute discordance entre les positions des pixels va entraîner l'ajout de bruit et donc une réduction de la qualité d'image.

Une technique qui a été proposée pour faire concorder les positions des pixels consiste à estimer le mouvement d'objets à partir des différences entre les images à faible résolution. Cependant, une telle estimation de mouvement est difficile et complexe à réaliser, et peut être imprécise, en particulier dans le cas d'objets qui ont des mouvements non continus ou non uniformes.

La demande de brevet US publiée sous le numéro US2009/0110285 décrit un procédé de reconstruction d'image à super-résolution qui ne repose pas directement sur une estimation de mouvement. Au lieu de cela, le procédé compare des valeurs de pixels entourant un pixel cible à des valeurs de pixels entourant des pixels dans le voisinage du pixel cible dans des images voisines.

Bien que la technique décrite dans cette demande de brevet US fournisse une alternative à la réalisation d'estimations de mouvement, elle comporte un certain nombre d'inconvénients, par exemple en termes de complexité, et en ce qui concerne la qualité d'image résultante.

La demande de brevet internationale publiée sous le numéro WO2011/092696 décrit un procédé et un système pour générer une image de sortie de résolution pixel augmentée à partir d'une image d'entrée.

La demande de brevet européen publiée sous le numéro EP1860875 décrit un dispositif comprenant un élément pour acquérir, à partir d'une image de source, une image représentée par des valeurs de pixels indiquant des niveaux de luminosité, l'élément définissant de façon séquentielle chaque pixel d'une ou plusieurs trames pour être des pixels cibles.

La publication de Harris C. et al. ayant comme titre "A combined corner and edge detector", Alvey Vision Conference, 1 janvier 1988, pages 147-151, décrit un détecteur combiné de coins et de frontières basés sur une fonction d'autocorrélation locale.

On a donc besoin dans la technique d'un procédé et d'un dispositif pour réaliser une reconstruction d'image à haute résolution.

<u>Résumé</u>

Un objet de modes de réalisation de la présente invention est de répondre au moins partiellement à un ou plusieurs besoins de l'art antérieur.

Selon un aspect, on prévoit un procédé de génération d'une image à super résolution par un dispositif de traitement, le procédé comprenant les étapes suivantes : sur-échantillonner une image d'entrée pour générer une image sur-échantillonnée ; et modifier la valeur de pixel d'un premier pixel de l'image sur-échantillonnée par les étapes suivantes : génération d'une valeur de similarité pour chacun d'une pluralité de pixels candidats dans l'image d'entrée et/ou dans une ou plusieurs autres images d'entrée, les pixels candidats étant choisis sur la base de la position du premier pixel dans l'image sur-échantillonnée, la valeur de similarité étant générée en évaluant la similarité d'un groupe de pixels environnants de chacun des pixels candidats avec un groupe de pixels environnants du premier pixel ; sélection d'un premier sous-ensemble de pixels candidats sur la base des valeurs de similarité ; et génération de la valeur de pixel modifiée du premier pixel sur la base des valeurs de pixels et des valeurs de similarité du premier sous-ensemble de pixels candidats.

Selon un mode de réalisation, la sélection du premier sous-ensemble des pixels candidats comprend la sélection d'une pluralité de pixels candidats ayant les valeurs de similarité les plus élevées.

Selon un autre mode de réalisation, la sélection du premier sous-ensemble des pixels candidats comprend la comparaison de la valeur de similarité de chaque pixel candidat à une valeur de seuil, et la sélection de chaque pixel candidat sur la base de la comparaison.

Selon un autre mode de réalisation, le procédé comprend en outre la modification de la valeur de pixel d'un deuxième pixel de l'image sur-échantillonnée par les étapes suivantes : sélection, sur la base de la position du deuxième pixel dans l'image sur-échantillonnée, d'une pluralité d'autres pixels candidats dans l'image d'entrée et/ou dans une ou plusieurs autres images d'entrée ; génération d'une valeur de similarité pour chaque autre pixel candidat en évaluant la similarité entre un groupe de pixels environnants du deuxième pixel et un groupe de pixels environnants de chacun des autres pixels candidats ; et génération de la valeur de pixel modifiée du deuxième pixel sur la base des valeurs de pixel et des valeurs de similarité de tous les autres pixels candidats.

Selon un autre mode de réalisation, le procédé comprend en outre la modification de la valeur de pixel d'un deuxième pixel de l'image sur-échantillonnée par les étapes suivantes : sélection, sur la base de la position du deuxième pixel dans l'image sur-échantillonnée, d'une pluralité d'autres pixels candidats dans l'image d'entrée et/ou dans une ou plusieurs autres images d'entrée ; génération d'une valeur de similarité pour chaque autre pixel candidat en évaluant la similarité entre un groupe de pixels environnants du deuxième pixel et un groupe de pixels environnants de chacun des autres pixels candidats ; sélection d'un deuxième sous-ensemble des autres pixels candidats, le deuxième sous-ensemble contenant plus de pixels candidats que le premier sous-ensemble ; et génération de la valeur de pixel modifiée du deuxième pixel sur la base du pixel et des valeurs de similarité de tous les pixels du deuxième sous-ensemble de pixels candidats.

Selon un autre mode de réalisation, le procédé comprend en outre les étapes suivantes : détermination de zones uniformes et non uniformes dans l'image sur-échantillonnée, le premier pixel étant déterminé comme tombant dans une zone non uniforme et le deuxième pixel étant déterminé comme tombant dans une zone uniforme ; et modification de la valeur de pixel d'un troisième pixel sur la base de pixels candidats sélectionnés sur la base du fait qu'il tombe dans une zone uniforme ou non uniforme.

Selon un autre mode de réalisation, la détermination des zones uniformes et non uniformes comprend la détermination d'une valeur d'uniformité ($h_k$) pour au moins un bloc de pixels de ladite image sur la base de l'équation suivante :

$$h_k = \left| \det(A_k) - \alpha . [trace(A_k)]^2 \right|$$

où $A_k$ est la matrice de covariance du bloc de pixels, det ($A_k$) est le déterminant de la matrice $A_k$, trace ($A_k$) est la trace de la matrice $A_k$, et $\alpha$ est une constante.

Selon un autre mode de réalisation, la valeur de pixel modifiée du premier pixel est générée en calculant une moyenne pondérée des valeurs de pixel des pixels candidats en pondérant les valeurs de pixel des pixels candidats du sous-ensemble sur la base des valeurs de similarité et en additionnant les valeurs de pixel pondérées.

Selon un autre mode de réalisation, la valeur de pixel modifiée du premier pixel est générée sur la base de la formule suivante :

$$x_i = \frac{\sum_{y_j \in \Omega(i)} w_{ij} y_j}{\sum_{y_j \in \Omega(i)} w_{ij}}$$

où $w_{ij}$ est la valeur de similarité du pixel candidat $y_j$, et $x_i^*$ est la valeur de pixel modifiée.

Selon un autre mode de réalisation, la valeur de pixel modifiée du premier pixel est générée en déterminant une médiane pondérée des valeurs de pixel des pixels candidats sur la base d'une somme cumulée des valeurs de similarité de pixels candidats ayant des valeurs de pixel au-dessus et/ou en dessous de la médiane pondérée.

Selon un autre mode de réalisation, la valeur de pixel modifiée du premier pixel est générée sur la base de la formule suivante :

$$\sum_{y_j \leq x_i^*} w_{ij} = A \sum_{y_j \geq x_i^*} w_{ij}$$

où A est une constante, $w_{ij}$ est la valeur de similarité du pixel candidat $y_j$, et $x_i^*$ est la valeur de pixel modifiée.

Selon un autre mode de réalisation, le procédé comprend en outre une réduction de taille de l'image sur-échantillonnée afin de générer les pixels environnants du premier pixel.

Selon un autre mode de réalisation, les valeurs de similarité sont déterminées sur la base du calcul suivant :

$$w_{ij} = \exp\left(-\frac{d_E^2(Px_i, Py_j)}{2\sigma_w^2}\right)$$

où $\sigma_w$ est une constante, $d_E^2$ est la distance euclidienne au carré, $Px_i$ est le groupe de pixels environnants du premier pixel et $Py_i$ est le groupe de pixels environnants de chacun des pixels candidats.

Selon un autre aspect, on prévoit un dispositif pour générer une image à super-résolution comprenant un dispositif de traitement agencé pour : sur-échantillonner une image d'entrée ; et modifier la valeur de pixel d'un premier pixel de l'image sur-échantillonnée par les étapes suivantes : génération d'une valeur de similarité pour chacun d'une pluralité de pixels candidats dans l'image d'entrée et/ou dans une ou plusieurs autres images d'entrée, choisis sur la base de la position du premier pixel dans l'image sur-échantillonnée, la valeur de similarité étant générée en évaluant la similarité d'un groupe de pixels environnants de chacun des pixels candidats avec un groupe de pixels environnants du premier pixel ; sélection d'un sous-ensemble de pixels candidats sur la base des valeurs de similarité ; et génération de la valeur de pixel modifiée du premier pixel sur la base des valeurs de pixels et des valeurs de similarité du premier sous-ensemble de pixels candidats.

Selon encore un autre aspect, on prévoit un support lisible par un ordinateur mémorisant un programme d'ordinateur qui, lorsqu'il est exécuté par un dispositif de traitement, amène la mise en oeuvre du procédé susmentionné.

Brève description des dessins

Les objets, caractéristiques, aspects et. avantages susmentionnés de l'invention, et d'autres, apparaîtront clairement à la lecture de la description détaillée suivante de modes de réalisation, donnés à titre d'illustration et non de limitation, en référence aux dessins joints dans lesquels :

la figure 1 est un schéma bloc représentant schématiquement un procédé de reconstruction d'image à super-résolution selon un exemple de réalisation ;

la figure 2 est un organigramme illustrant des étapes dans un procédé de génération d'une image à super-résolution selon un exemple de réalisation ;

la figure 3 illustre une portion d'une image sur-échantillonnée et d'une image à faible résolution selon un exemple de réalisation ;

la figure 4 illustre un exemple de fenêtre de recherche utilisée dans un procédé de reconstruction d'images à super-résolution selon un exemple de réalisation ;

la figure 5 est un organigramme illustrant plus en détail une étape dans le procédé de la figure 2 selon un exemple de réalisation ;

la figure 6 est un graphique illustrant un exemple de la sélection d'une valeur de pixel médiane selon un exemple de réalisation ;

la figure 7 est un organigramme illustrant des étapes dans un procédé de génération d'une image à super-résolution selon un autre exemple de réalisation ;

la figure 8 est un graphique illustrant un exemple de résultats obtenus par les procédés décrits dans la présente description selon un exemple de réalisation ; et

la figure 9 illustre schématiquement un dispositif électronique pour mettre en oeuvre les procédés décrits ici.

Description détaillée de modes de réalisation de la présente invention

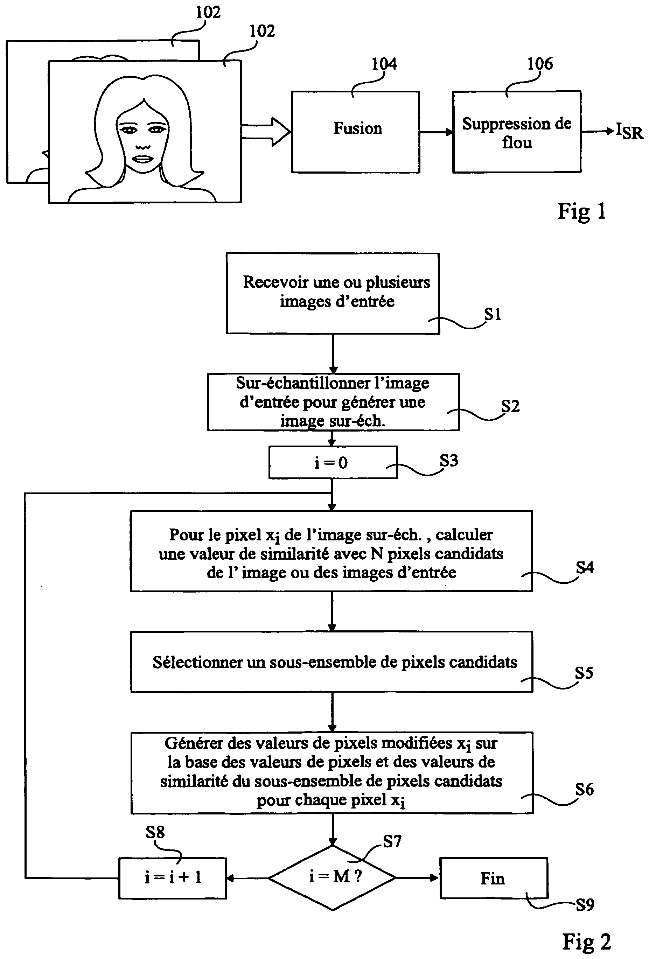

La figure 1 illustre schématiquement un exemple des étapes principales d'un procédé pour réaliser une reconstruction d'images à super-résolution. Comme cela est illustré, une ou plusieurs images à faible résolution 102 sont fournies à un module de fusion 104. Le terme "faible résolution" tel qu'il est utilisé ici n'est pas limité à une résolution spécifique, mais désigne simplement une image qui a une résolution inférieure à celle de l'image à super-résolution à générer. En outre, le terme "image" est utilisé ici pour désigner un ensemble de valeurs de pixels correspondant à un réseau 2D, mais dans des variantes de réalisation, une "image" pourrait inclure d'autres types de signaux, comme ceux qui sont capturés par une rétine électronique.

Bien qu'une image à super-résolution soit souvent générée sur la base d'au moins deux images d'entrée à faible résolution, dans certains cas elle pourrait être générée à partir d'une seule image à faible résolution. En particulier, il existe de nombreuses situations dans lesquelles on peut utiliser différentes zones d'une même image à faible résolution pour augmenter la résolution globale de l'image, par exemple dans le cas d'images contenant des motifs qui se répètent plusieurs fois dans l'image.

Le module de fusion 104 applique un procédé de fusion à l'image ou aux images à faible résolution, afin d'extraire des informations de pixel qui sont utilisées pour modifier des pixels dans une image sur-échantillonnée.

Après l'achèvement de la fusion, l'image à super-résolution est fournie à un module de suppression de flou 106, qui applique un algorithme de suppression de flou afin d'augmenter le piqué de l'image, et génère l'image finale à super-résolution $I_{SR}$. En particulier, le procédé de fusion conduit souvent à une atténuation des fréquences supérieures de l'image, qui peut être compensée par le module de suppression de flou.

La description suivante va se focaliser sur le procédé de fusion mis en oeuvre par le module 104. Les algorithmes de suppression de flou sont bien connus de l'homme de l'art, et ne vont pas être décrits en détail ici.

La figure 2 est un organigramme illustrant des étapes dans un procédé de génération d'une image à super-résolution selon un exemple de réalisation, et en particulier les étapes pour réaliser l'opération de fusion 104 de la figure 1. En particulier, la technique implique la modification des valeurs de pixel d'une image sur-échantillonnée pour générer une image à super-résolution.

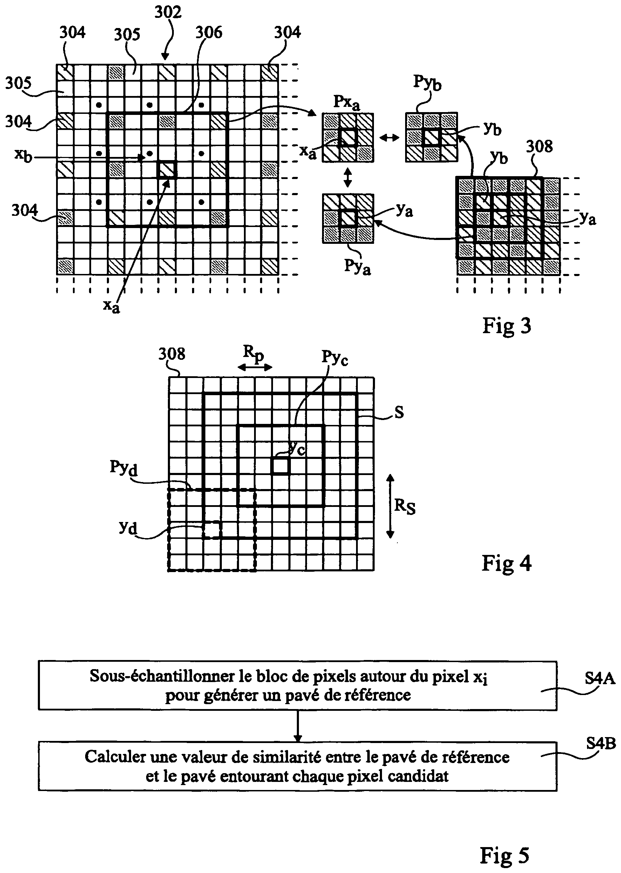

Les étapes du procédé de la figure 2 vont être décrites aussi en référence à la figure 3, qui illustre une portion de l'image sur-échantillonnée 302 et une portion d'une image à faible résolution 308.

Dans la première étape S1 de la figure 2, une ou plusieurs images d'entrée sont reçues. Par exemple, lesdites une ou plusieurs images d'entrée correspondent à l'unique image à faible résolution ou à une séquence d'images à faible résolution 102 de la figure 1. Dans le cas d'une séquence d'images à faible résolution, chacune des images a par exemple la même résolution.

Dans l'étape suivante S2, l'une des images à faible résolution est sur-échantillonnée pour obtenir une image sur-échantillonnée. S'il n'y a qu'une seule image d'entrée à faible résolution, alors cette image est sur-échantillonnée. En variante, s'il y a une séquence d'images à faible résolution correspondant à des trames d'une séquence vidéo, une image située au niveau ou à proximité du point milieu de la séquence d'images est par exemple sélectionnée pour être sur-échantillonnée, de sorte que l'image sur-échantillonnée est une image qui est relativement similaire à chacune des autres images d'entrée.

Un exemple d'une portion d'une telle image sur-échantillonnée 302 est illustré sur la gauche en figure 3. Les pixels 304 de l'image sur-échantillonnée 302, qui sont représentés sous la forme de carrés remplis de hachures, représentent ceux qui proviennent directement d'une image à faible résolution. Les pixels intermédiaires 305, qui sont représentés sous la forme de carrés vides ou contenant un point en figure 3, ont par exemple des valeurs de pixel générées par un algorithme d'interpolation appliqué pendant l'opération de sur-échantillonnage. Par exemple, l'algorithme d'interpolation de Lanczos pourrait être utilisé, ou un autre algorithme d'interpolation comme cela est bien connu de l'homme de l'art. Dans l'exemple de la figure 3, l'image sur-échantillonnée comporte trois fois plus de pixels dans chacune des directions horizontale et verticale que l'image d'origine. Cependant, de nombreux autres rapports de sur-échantillonnage pourraient être utilisés.

En faisant de nouveau référence à la figure 2, dans l'étape suivante S3, une variable i est initialisée, par exemple à zéro.

Dans une étape suivante S4, pour le pixel $x_i$ de l'image sur-échantillonnée, une valeur de similarité est calculée à l'aide de N pixels candidats sélectionnés dans l'image ou les images d'entrée. Les pixels candidats sont par exemple déterminés sur la base de la position du pixel $x_i$ dans l'image sur-échantillonnée. Le nombre N de pixels candidats peut être choisi sur la base de divers facteurs, comme le nombre d'images d'entrée, l'intervalle de temps entre les instants de capture des images, la résolution des images d'entrée, etc...

La similarité entre le pixel $x_i$ et chaque pixel candidat est évaluée sur la base d'un pavé de pixels $P_x$ extrait de l'image sur-échantillonnée 302 par une opération de sous-échantillonnage. Par exemple, la résolution du pavé de pixels $P_x$ est égale à celle de l'image à faible résolution à partir de laquelle l'image sur-échantillonnée a été générée. Dans l'exemple de la figure 3, pour un pixel $x_a$ de l'image sur-échantillonnée 302, un bloc 306 de pixels est sous-échantillonné pour générer un pavé Px$_a$ correspondant à un bloc de trois par trois pixels, ayant le pixel x$_a$ comme pixel central. Dans cet exemple, le pavé Px$_a$ comprend tous les pixels pris directement dans l'image à faible résolution utilisée pour générer l'image sur-échantillonnée 302.

Le pavé P$_x$ est comparé à un pavé correspondant à chacun des pixels candidats. Dans l'exemple de la figure 3, un pixel candidat y$_a$ est pris dans l'image à faible résolution 308 et a la même position de pixel que le pixel x$_a$ dans l'image d'entrée à faible résolution. Un pavé Py$_a$ est extrait en correspondance avec un bloc de trois par trois pixels ayant le pixel y$_a$ comme pixel central. Le pavé Py$_a$ est comparé au pavé Px$_a$ pour déterminer leurs similarités, par exemple en calculant leur distance euclidienne comme cela est décrit plus en détail ci-après.

De façon similaire, le pavé Px$_a$ est comparé à d'autres pavés correspondant à d'autres pixels candidats dans l'image à faible résolution 308 et/ou dans d'autres images à faible résolution. La figure 3 représente un exemple d'un autre pavé Py$_b$, associé à un pixel candidat y$_b$ situé un pixel au-dessus et à gauche du pixel y$_a$ dans l'image à faible résolution 308.

Dans certains modes de réalisation, des pixels candidats sont aussi pris dans l'image à faible résolution qui a été utilisée pour générer l'image sur-échantillonnée 302. Pour les pixels x$_i$ de l'image sur-échantillonnée qui correspondent à des pixels de cette image à faible résolution, comme le pixel x$_a$, le pavé candidat va correspondre exactement au pavé de référence, conduisant à une similarité parfaite. Toutefois, cela ne sera pas le cas pour les pixels interpolés de l'image sur-échantillonnée, comme le pixel x$_b$.

Des valeurs de similarité sont déterminées pour les autres pixels x$_i$ de l'image sur-échantillonnée d'une manière similaire au pixel x$_a$. Par exemple, dans le cas d'un pixel x$_b$ situé un pixel au-dessus et à gauche du pixel x$_a$ dans l'image sur-échantillonnée 302, le pavé Px$_b$ correspond par exemple aux neuf pixels représentés avec des points dans la figure 3, chacun d'eux contenant une valeur interpolée.

Dans un exemple, pour un pixel x$_i$ à modifier dans l'image sur-échantillonnée, les pixels candidats sont sélectionnés de façon à être ceux se trouvant dans une fenêtre de recherche à une certaine distance du pixel y$_j$, située à un emplacement correspondant à celui du pixel x$_i$, comme on va le décrire maintenant en référence à la figure 4.

La figure 4 illustre un exemple de la génération des pavés à partir de l'image à faible résolution 308 de la figure 3. Comme cela est illustré, dans cet exemple un pavé Py$_C$ a un rayon Rp par rapport au pixel central y$_C$, et en supposant que le pavé est carré, le pavé a ainsi les dimensions (2Rp+1) par (2R$_p$+1). Tous les pavés ont par exemple le même rayon de pavé, qui est par exemple choisi entre 1 et 10 pixels. Le nombre de pavés comparés au pavé de référence est déterminé par la taille de la fenêtre de recherche S à partir de laquelle les pavés sont extraits. La fenêtre de recherche S dans l'image à faible résolution 308 correspond par exemple à des pixels candidats tombant dans un rayon R$_S$ par rapport au pixel central. Dans l'exemple de la figure 4, un exemple de pixel candidat y$_d$ tombant dans le coin du bas à gauche de la fenêtre de recherche est illustré avec un pavé correspondant Py$_d$. Ainsi, une fenêtre de recherche carrée a par exemple des dimensions (2R$_S$+1) par (2R$_S$+1), et ainsi va générer un total de (2R$_S$+1)$^2$ pavés. Le rayon de la fenêtre de recherche est par exemple compris entre 1 et 10 pixels. Dans certains modes de réalisation, le rayon de la fenêtre de recherche peut être sélectionné sur la base du mouvement maximum entre l'image utilisée pour générer l'image sur-échantillonnée 302 et chacune des autres images. Une fenêtre de recherche similaire ou identique est par exemple utilisée pour chaque image d'entrée à faible résolution.

Un exemple des étapes réalisées dans l'étape S4 de la figure 2 va maintenant être décrit plus en détail en faisant référence à la figure 5.

La figure 5 est un organigramme illustrant plus en détail l'étape S4 de la figure 2 selon un exemple de réalisation dans lequel la valeur de similarité est calculée en utilisant la distance euclidienne.

Initialement, dans une sous-étape S4A, un bloc de pixels entourant le pixel x$_i$ dans l'image sur-échantillonnée est sous-échantillonné pour générer le pavé de référence Px$_i$.

Dans une sous-étape suivante S4B, la valeur de similarité entre le pavé de référence et un pavé Py$_j$ entourant chaque pixel candidat est calculée, sur la base de la distance euclidienne d$_E$. Par exemple, la valeur de similarité est déterminée par le calcul suivant :

$$W_{ij} = \exp\left(-\frac{d_E^2(Px_i, Py_j)}{2\sigma_w^2}\right)$$

où $\sigma_w$ est une constante qui contrôle les pondérations et par conséquent détermine les contributions des pixels voisins, et "$d_E^2()$" est la distance euclidienne au carré, qui est par exemple calculée de la façon suivante :

$$d_E^2\left(P_{x_i}, P_{y_j}\right) = \frac{1}{N_{patch}} \sum_{k \in patch} \left(P_{x_i}(k) - P_{y_j}(k)\right)^2$$

où $N_{patch}$ est le nombre de pixels formant chaque pavé.

Dans des variantes de réalisation, on pourrait utiliser d'autres algorithmes pour calculer la similarité entre les pavés.

A titre d'exemple, le tableau I suivant fournit une liste de pixels candidats et de valeurs de similarité associées.

Tableau I

| Pixel candidat | Valeur de pixel | Valeur de similarité |
|---|---|---|
| $y_1$ | 199 | 0,56 |
| $y_2$ | 244 | 0,52 |
| $y_3$ | 212 | 0,61 |
| $Y_4$ | 165 | 0,66 |
| $Y_5$ | 207 | 0,85 |
| $Y_6$ | 177 | 0,69 |
| $Y_7$ | 199 | 0,89 |
| $y_8$ | 250 | 0,57 |
| $y_9$ | 166 | 0,49 |

Par exemple, dans ce tableau, les pixels candidats $y_1$ à $y_9$ sont les pixels formant un bloc de pixels de trois par trois, les valeurs de pixel sont par exemple représentées par 8 bits, et ainsi chacune a une valeur comprise entre 0 et 255, et les valeurs de similarité sont par exemple sur une échelle entre 0 et 1, les valeurs proches de 0 indiquant une très faible similarité, et les valeurs proches de 1 indiquant une très forte similarité.

En faisant de nouveau référence à la figure 2, après l'étape S4, l'étape suivante est S5, dans laquelle un sous-ensemble des pixels candidats est sélectionné. Par exemple, pour cela, on utilise une valeur de seuil pour éliminer certains candidats sur la base des valeurs de similarité. Par exemple, une valeur de seuil de 0,65 va éliminer tous les pixels candidats du tableau I exceptés les pixels $y_4$ à $y_7$. La même valeur de seuil est par exemple utilisée pour tous les pixels. En variante, les valeurs candidates peuvent être classées sur la base de leurs valeurs de similarité, et seulement un certain nombre des candidats classés les plus hauts est sélectionné. Par exemple, entre 90 et 10 % de valeurs candidates peuvent être sélectionnées pour former le sous-ensemble de pixels candidats. Un avantage de sélectionner un pourcentage de pixels candidats est que la sélection est automatiquement adaptée à la distribution des valeurs de similarité.

Dans une étape suivante S6, une nouvelle valeur de pixel est générée pour chaque pixel $x_i$ sur la base des valeurs de pixel et des valeurs candidates du sous-ensemble de pixels candidats.

Par exemple, en prenant l'exemple des pixels candidats du tableau I précédent, et en supposant qu'un seuil de 0,65 est utilisé pour sélectionner le sous-ensemble de pixels candidats, le sous-ensemble de pixels candidats comprend par exemple ceux du tableau II ci-après, qui ont été classés sur la base de la valeur de pixel pour chaque pixel candidat.

Tableau II

| Pixel candidat | Valeur de pixel | Valeur de similarité | Valeur de pixel pondérée |
|---|---|---|---|
| $Y_5$ | 207 | 0,85 | 176,0 |
| $Y_7$ | 199 | 0,89 | 177,1 |
| $Y_6$ | 177 | 0,69 | 122,1 |
| $Y_4$ | 165 | 0,66 | 108,9 |

La valeur de pixel pondérée est par exemple déterminée pour chaque pixel candidat du sous-ensemble en multipliant chaque valeur de pixel par sa valeur de similarité correspondante. La nouvelle valeur de pixel $x_i$ est ensuite

calculée par exemple en tant que moyenne pondérée des valeurs de pixel, par exemple sur la base du calcul suivant :

$$x_i = \frac{\sum\limits_{y_j \in \Omega(i)} w_{ij} y_j}{\sum\limits_{y_j \in \Omega(i)} w_{ij}}$$

où $y_j$ sont les pixels candidats du sous-ensemble $\Omega(i)$, et $W_{ij}$ est la valeur de similarité pour chaque pixel candidat du sous-ensemble. En prenant les valeurs fournies à titre d'exemple dans le tableau II susmentionné, la somme des valeurs de pixel pondérées est ainsi de 584,1, et la somme des valeurs de similarité est ainsi de 3,09, et la valeur de pixel modifiée peut être calculée comme égale à 189. Ainsi, alors que la moyenne des quatre valeurs de pixels candidats est égale à 187, après avoir plus fortement pondéré les candidats les plus similaires, on obtient une valeur de pixel plus exacte.

Dans une variante de réalisation, plutôt que de prendre une moyenne pondérée des valeurs de pixel du sous-ensemble de valeurs candidates, la valeur de pixel modifiée pourrait être calculée en tant que valeur de pixel médiane pondérée $x_i^*$ parmi le sous-ensemble de valeurs candidates. En particulier, la valeur de pixel médiane pondérée $x_i^*$ est par exemple choisie pour vérifier la relation suivante :

$$\sum_{y_j \leqslant x_i^*} w_{ij} = A \sum_{y_j \geqslant x_i^*} w_{ij}$$

où A est une constante et $w_{ij}$ est la valeur de similarité du pixel candidat $y_j$.

Dans certains modes de réalisation, la constante A est égale à 1. En d'autres termes, la valeur médiane pondérée $x_i^*$ correspond à la valeur de pixel du pixel candidat pour laquelle la somme cumulée des valeurs de similarité pour les pixels candidats ayant une valeur de pixel inférieure à la valeur médiane pondérée $x_i^*$ est égale à la somme cumulée des valeurs de similarité pour les pixels candidats ayant une valeur de pixel supérieure à la valeur médiane pondérée $x_i^*$.

A titre de variante, la constante A pourrait être égale à une valeur autre que 1, par exemple telle que la somme cumulée des similarités en-dessous de la valeur $x_i^*$ soit comprise entre 40 et 60 % de la somme totale des similarités. Ainsi A est par exemple égale à une valeur comprise entre 0,667 et 1,5.

Le plus souvent, il va y avoir un seul pixel candidat médian pondéré. En effet, le calcul de la somme cumulée des valeurs de similarité à partir de la valeur de pixel candidate la plus faible jusqu'à la plus élevée va en général conduire à ce que la limite déterminée par la constante A soit dépassée lorsque la valeur de similarité d'un énième pixel candidat est ajouté à la somme cumulée. En effet, si la somme cumulée est au lieu de cela calculée à partir de la valeur de pixel candidate la plus élevée et en allant vers la valeur la plus faible, la valeur de seuil va être atteinte lorsque la valeur de similarité du même énième pixel candidat est ajoutée à la somme cumulée. Ce énième pixel candidat fournit ainsi par exemple la valeur médiane pondérée.

A titre d'exemple, en supposant que la constante A soit égale à 1, la valeur de similarité cumulée de seuil est égale à 50 % de la somme totale des valeurs de similarité. En prenant l'exemple du tableau II susmentionné, la valeur de similarité cumulée de seuil est ainsi égale à 3,09/2 = 1,545. La valeur de pixel médiane est ainsi celle du pixel $Y_7$, égale à 199 dans cet exemple.

Cependant, dans certains cas, après avoir ajouté la valeur de similarité du énième pixel candidat, le score cumulé peut être exactement égal à la valeur limite déterminée par la constante A. Dans ce cas, la valeur médiane pondérée est par exemple calculée comme étant la moyenne des valeurs de pixel candidates de rang n et (n+1).

Par exemple, en prenant l'exemple du tableau II susmentionné dans le cas où la constante A est égale à 0,776, la limite pour la somme cumulée des valeurs de similarité en commençant à partir de la valeur candidate la plus faible va être égale à (A/A+1)x3,09=1,35. Puisque cette limite va être atteinte exactement par la somme des valeurs de similarité des pixels $y_4$ et $y_6$ dans le tableau II, la valeur médiane pondérée est par exemple choisie comme étant la moyenne des valeurs $y_6$ et $y_7$, c'est-à-dire (177+199)/2=188.

En faisant de nouveau référence à la figure 2, dans une étape suivante S7, on détermine si la variable i est égale à M, quand il y a par exemple un total de M+1 pixels dans l'image sur-échantillonnée. Dans la négative, l'étape suivante est S8, dans laquelle la variable i est incrémentée, et ensuite le procédé revient à l'étape S4. Dans l'autre cas, une fois que le pixel final $x_M$ de l'image a été traité, l'étape après S7 est l'étape S9, dans laquelle le procédé de fusion se termine et une suppression de flou est par exemple effectuée sur l'image générée, comme cela a été décrit précédemment en référence à la figure 1.

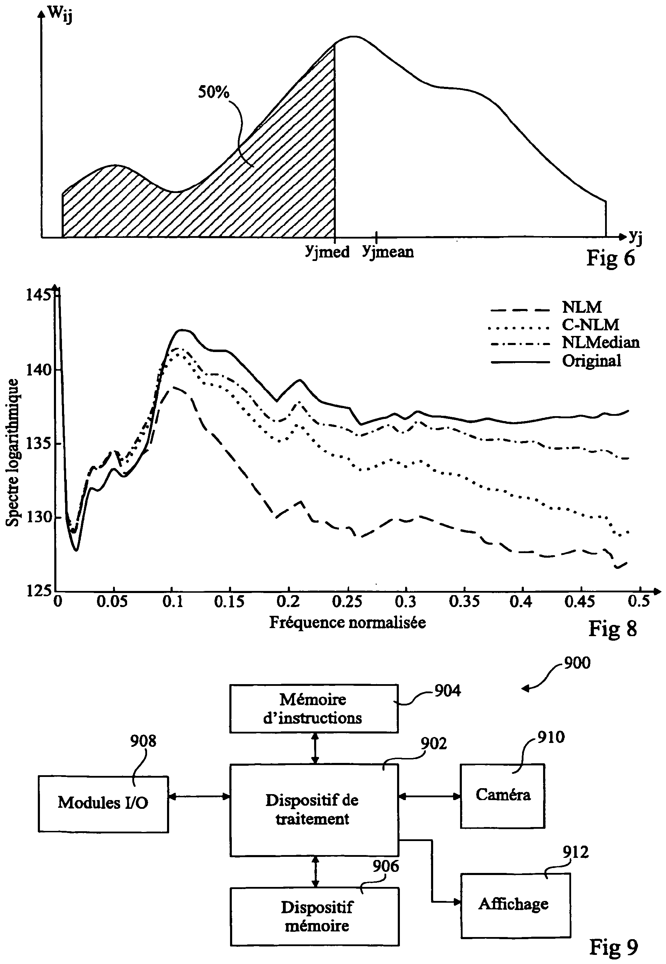

La figure 6 est un graphique illustrant les valeurs de similarité $W_{ij}$ en fonction des valeurs de pixel $y_j$. On notera

que pour une valeur de pixel donnée, il peut y avoir plus d'un seul pixel candidat représenté par des points sur la courbe. Comme cela est représenté dans la figure, dans le cas où la constante A est égale à 1, la valeur de pixel médiane correspond à la valeur pour laquelle la surface en-dessous de la courbe est égale de chaque côté de cette valeur, c'est-à-dire, égale à 50 % de la surface totale en-dessous de la courbe. Un exemple de la valeur moyenne pondérée $y_{jmean}$ est aussi illustré en figure 6, qui dans cet exemple est supérieure à la valeur médiane.

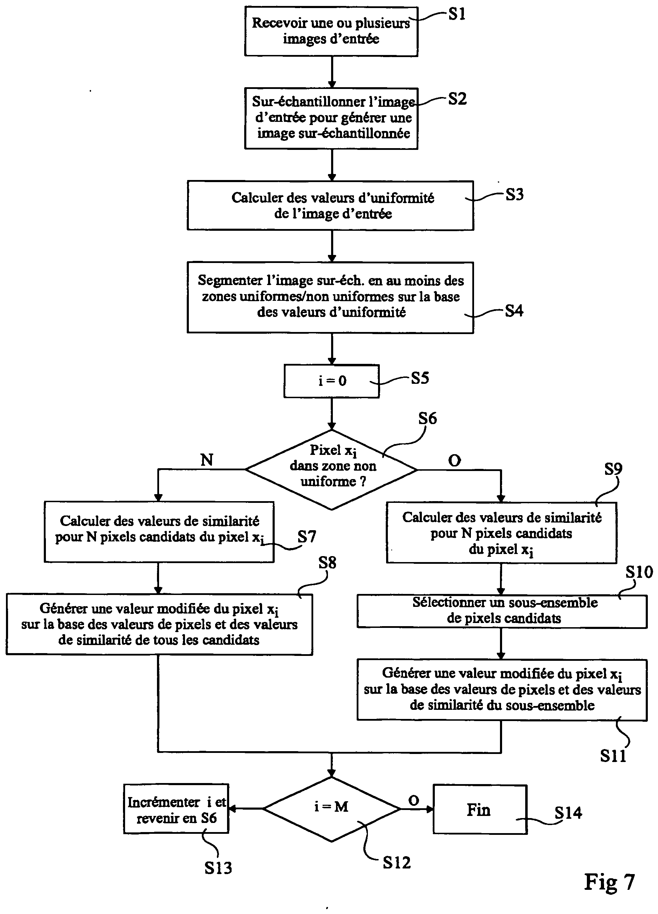

La figure 7 est un organigramme illustrant des étapes dans une variante de procédé de génération d'une image à super-résolution par rapport à celui de la figure 2.

Les étapes initiales S1 et S2 de réception d'une ou plusieurs images d'entrée et de sur-échantillonnage d'une image d'entrée sont les mêmes que les étapes correspondantes de la figure 2, et ne vont pas être décrites de nouveau en détail ici.

Dans une étape suivante S3 de la figure 7, des valeurs d'uniformité sont calculées pour l'image d'entrée à faible résolution utilisée pour générer l'image sur-échantillonnée. Pour cela, l'image d'entrée est par exemple divisée en blocs de pixels, et la valeur absolue de Harris est par exemple calculée pour chaque bloc. L'application de la valeur de Harris pour une détection de coin et de bord est par exemple décrite plus en détail dans la publication technique intitulée "A combined corner and edge detector", C. Harrys and M. Stephens, proceeding of 4th Alvey Vision Conference, pages 147-151.

Dans un exemple, initialement un filtre passe-bas gaussien, ayant par exemple une taille de cinq par cinq pixels, est appliqué à l'image à faible résolution. Ensuite, des dérivées horizontales $I_H$ et des dérivées verticales $I_V$ sont par exemple calculées dans l'image filtrée pour chaque valeur de pixel.

Ensuite, pour chaque bloc k de l'image à faible résolution, où k est par exemple un bloc de huit par huit pixels, une matrice de covariance est par exemple générée de la façon suivante :

$$A_k = \begin{bmatrix} \left\langle I_H^2 \right\rangle_k & \left\langle I_H I_V \right\rangle_k \\ \left\langle I_H I_V \right\rangle_k & \left\langle I_V^2 \right\rangle_k \end{bmatrix}$$

où $\langle . \rangle_k$ est la valeur moyenne pour le bloc k.

La valeur absolue de Harris $h_k$ est ensuite par exemple calculée pour chaque bloc k sur la base de cette matrice de covariance en utilisant l'équation suivante :

$$h_k = \left| \det(A_k) - \alpha.\left[trace(A_k)\right]^2 \right|$$

où $\det(A_k)$ est le déterminant de la matrice $A_k$, trace $(A_k)$ est la trace de la matrice $A_k$, et $\alpha$ est une constante. Sur la base de la valeur absolue de Harris calculée pour chaque bloc k, une valeur d'uniformité binaire est par exemple calculée pour chaque bloc en comparant la valeur absolue de Harris à une valeur de seuil. Par exemple, les valeurs d'uniformité sont calculées en appliquant la règle suivante :

$$U(p_k) = \begin{cases} 0 & \text{si } h_k \geq \gamma. \max\{h_k\} \\ 1 & \text{sin on} \end{cases}$$

où $P_k$ sont les pixels du bloc k, $\gamma$ est une constante, et $\gamma.\max\{h_k\}$ est la valeur de seuil, $\max\{h_k\}$ étant la valeur de Harris la plus élevée pour tous les blocs de l'image.

En faisant de nouveau référence à l'organigramme de la figure 7, dans une étape suivante S4, l'image sur-échantillonnée générée dans l'étape S2 est segmentée en zones uniformes et non uniformes sur la base des valeurs d'uniformité générées dans l'étape S3. Par exemple, pour chaque bloc k de l'image d'entrée à faible résolution, on détermine qu'un bloc correspondant de pixels de l'image sur-échantillonnée est une zone non uniforme si la valeur d'uniformité est égale à 0, ou une zone uniforme si la valeur d'uniformité est égale à 1.

Dans une étape suivante S5, une variable i est par exemple initialisée à 0.

Ensuite, dans une étape suivante S6, on détermine si le pixel $x_i$ de l'image sur-échantillonnée est ou pas dans une zone non uniforme. Dans la négative, l'étape suivante est S7, dans laquelle des valeurs de similarité sont calculées d'une manière similaire à celle décrite précédemment en référence à l'étape S4 de la figure 2.

Après l'étape S7, l'étape suivante et l'étape S8, dans laquelle une valeur de pixel modifiée $x_i$ est générée sur la base des valeurs de pixel et des valeurs de similarité de tous les N pixels candidats. En particulier, les techniques pour générer cette valeur de pixel modifiée, qui pourraient être basées sur une moyenne pondérée ou une valeur médiane pondérée, sont par exemple les mêmes que celles décrites précédemment en référence à l'étape S5 de la figure 2 et aux tableaux I et II, excepté que tous les pixels sont pris en compte, plutôt que seulement ceux d'un sous-ensemble sélectionné.

Dans l'autre cas, si dans l'étape S6 le pixel $x_i$ est déterminé comme étant non uniforme, l'étape suivante est S9, dans laquelle les valeurs de similarité sont de nouveau calculées pour tous les N pixels candidats.

Cependant, l'étape après S9 est S10, dans laquelle un sous-ensemble des pixels candidats est sélectionné d'une manière similaire à celle décrite précédemment en relation avec l'étape S5 de la figure 2.

Après l'étape S10, l'étape suivante est S11 qui est similaire à l'étape S6 de la figure 2 décrite précédemment, dans laquelle une nouvelle valeur de pixel $x_i$ est générée sur la base du sous-ensemble sélectionné de valeurs de pixel candidates.

Après les étapes S8 et S11, l'étape suivante est S12, dans laquelle on détermine si la variable i est égale à M, par exemple dans le cas où il y a un total de M+1 pixels dans l'image sur-échantillonnée. Dans la négative, l'étape suivante est S13, dans laquelle la variable i est incrémentée, et le procédé revient à S6. Dans l'autre cas, lorsque i est égal à M, le procédé se termine par exemple à l'étape S14, et une suppression de flou est par exemple réalisée sur l'image générée, comme cela a été décrit précédemment en référence à la figure 1.

Dans une variante de réalisation, plutôt que de générer une nouvelle valeur de pixel sur la base de tous les pixels candidats, dans l'étape S8 de la figure 7, la valeur de pixel modifiée pourrait être calculée sur la base d'un sous-ensemble de pixels candidats plus grand que celui sélectionné à l'étape S10. Par exemple, le sous-ensemble de pixels candidats sélectionné pour des pixels se trouvant dans les zones non uniformes pourrait être sélectionné sur la base d'une première valeur de seuil ou d'un premier pourcentage de candidats, et le sous-ensemble de pixels candidats sélectionné pour des pixels se trouvant dans les zones uniformes pourrait être sélectionné sur la base d'une deuxième valeur de seuil inférieure à la première valeur de seuil, ou d'un deuxième pourcentage de candidats supérieur au premier pourcentage.

Ainsi, l'organigramme de la figure 7 illustre un exemple dans lequel l'un ou l'autre de deux procédés de modification de pixel est utilisé en fonction du fait que chaque pixel correspond ou pas à une zone uniforme ou non uniforme. Dans certains modes de réalisation, des zones de bordure sont définies en plus au niveau de la frontière entre les zones uniformes et non uniformes. Les pixels se trouvant dans de telles zones de bordure sont par exemple traités sur la base d'un mélange des deux procédés de modification de pixels.

Par exemple, pour les pixels se trouvant dans les zones de bordure, la règle suivante est appliquée :

$$x_i = (1 - U(p)) \cdot x_{i1}(p) + U(p) \cdot x_{i2}(p)$$

où $x_{i1}(p)$ est la valeur de pixel modifiée générée par le procédé correspondant aux étapes S9 à S11 de la figure 6, et $x_{i2}(p)$ est la valeur de pixel modifiée générée par le procédé correspondant aux étapes S7 et S8 de la figure 6. U(p) est la valeur d'uniformité pour le pixel en question, et dans les zones de bordure, cette valeur est par exemple égale à 0,5, de sorte que la pondération appliquée aux deux procédés de génération de pixels est égale. A titre de variante, on pourrait obtenir une transition plus graduelle entre la zone uniforme et la zone non uniforme en diminuant progressivement U(p) de 1 à 0 en traversant la frontière entre uniforme et non uniforme.

La figure 8 est un graphique illustrant un exemple des résultats qui ont été obtenus en appliquant les techniques de génération d'image à super-résolution décrites ici. En particulier, ce graphique représente le spectre logarithmique en fonction de la fréquence normalisée, qui est une fréquence spatiale radiale, c'est-à-dire qu'à chaque fréquence spatiale le spectre est obtenu à partir des spectres cumulés sur toutes les orientations. En d'autres termes, un spectre 2D de l'image est calculé, le centre du spectre (DC) étant la valeur moyenne. Ensuite, les ordonnées du spectre radial à l'abscisse R sont calculées en tant que somme des ordonnées du spectre 2D pour chaque point qui se trouve à une distance égale R du centre du spectre.

Une ligne continue en figure 8 représente une image d'origine. Autrement dit, dans le but d'obtenir le graphique de la figure 8, une image à haute résolution d'origine a été analysée pour obtenir la ligne courbe continue de la figure 8, puis a été sous-échantillonnée pour générer des images d'entrée à faible résolution. En particulier, dans les exemples de la figure 8, du bruit d'écart type 10 a été ajouté à une image mesurant 512 par 512 pixels. L'image bruitée a été ensuite décalée et sous-échantillonnée d'un facteur 3 dans chaque dimension pour générer neuf images à faible résolution.

Un indicateur important de la performance d'une technique de construction d'image à super-résolution est l'étendue avec laquelle le spectre spatial de l'image résultante concorde avec celui de l'image originale/idéale.

Une ligne en trait interrompu en figure 8 représente le résultat obtenu en appliquant ce que nous appellerons le procédé "à moyenne non locale" (NLM) de génération de l'image à super-résolution, qui correspond à la technique décrite précédemment en relation avec la figure 2, excepté que la valeur de pixel modifiée est calculée sur la base de la moyenne pondérée de tous les pixels candidats, plutôt que sur la base de seulement un sous-ensemble sélectionné de candidats. Comme cela est illustré, le spectre de fréquences spatial résultant dans l'image est relativement éloigné de celui de l'image d'origine.

Une ligne en pointillé en figure 8 représente le résultat obtenu en appliquant ce que nous appellerons le procédé "à moyenne non locale contrainte" (C-NLM), qui correspond au procédé décrit en relation avec la figure 7, sur la base d'une moyenne pondérée de tous les pixels candidats dans les zones uniformes, et d'un sous-ensemble sélectionné de pixels candidats dans les zones non uniformes. Le résultat est nettement amélioré par rapport au procédé NLM.

Une ligne en trait mixte en figure 8 représente le résultat obtenu en utilisant le pixel candidat médian pondéré décrit en référence à la figure 6, en combinaison avec le procédé à moyenne non locale contrainte. On observera que le résultat est particulièrement proche de celui de l'image d'origine.

La figure 9 illustre schématiquement, sous forme de schéma bloc, un dispositif 900 adapté à une mise en oeuvre des procédés décrits ici.

Le dispositif 900 comprend un dispositif de traitement 902 qui comprend par exemple un ou plusieurs processeurs pouvant exécuter des instructions mémorisées dans une mémoire d'instruction 904 couplée au dispositif de traitement 902. L'exécution de ces instructions provoque la mise en oeuvre des procédés décrits ici, par exemple le procédé représenté par les organigrammes des figures 2, 5 et 7.

Le dispositif de traitement 902 est par exemple aussi couplé à un dispositif mémoire 906 mémorisant les images d'entrée à traiter ainsi que l'image finale à super-résolution, et toutes les images intermédiaires générées pendant les procédés. Un ou plusieurs modules d'entrée/sortie 908, comme des ports d'entrée/sortie, un clavier et/ou une souris, un écran tactile, etc..., sont aussi couplés par exemple au dispositif de traitement 902. En outre, dans certains modes de réalisation, une caméra 910 est couplée au dispositif de traitement pour capturer des images d'entrée à faible résolution à utiliser pour reconstruire l'image à super-résolution. La caméra 910 pourrait comprendre un réseau de capteurs d'image, comme un capteur d'image CMOS, ou un autre type de réseau de capteurs, comme ceux utilisés dans une rétine électronique. En outre, un afficheur 912 est par exemple prévu pour afficher les diverses images.

Ainsi, les modes de réalisation décrits ici fournissent un procédé et un dispositif pour générer une image à super-résolution ayant une qualité d'image améliorée et une complexité réduite par rapport à des solutions de l'art antérieur. En particulier, en choisissant les pixels candidats en fonction de la position du pixel à modifier, puis en filtrant ces pixels candidats pour sélectionner un sous-ensemble à utiliser pour générer la valeur de pixel modifiée, on évite un sur-lissage de l'image, et le calcul des pixels est simplifié.

En outre, en sélectionnant la valeur de pixel modifiée comme étant un pixel candidat médian pondéré sur la base des valeurs de similarité, on peut obtenir encore plus d'améliorations de la qualité d'image.

En outre, en modifiant des pixels présents dans les zones non uniformes de l'image sur la base d'un sous-ensemble des pixels candidats, et ceux présents dans les zones uniformes de l'image sur la base de tous les pixels candidats, la qualité de l'image est encore améliorée.

Avec la description ainsi faite d'au moins un mode de réalisation illustratif de l'invention, diverses altérations, modifications et améliorations apparaîtront facilement à l'homme de l'art.

Par exemple, bien que l'on ait décrit des exemples dans lesquels la valeur de pixel de chaque pixel dans l'image sur-échantillonnée est modifiée pour générer l'image à super-résolution, il sera clair pour l'homme de l'art que dans certains cas certaines zones de l'image peuvent être entièrement exclues de la modification des pixels.

En outre, bien que les exemples de modes de réalisation détaillent la génération d'une image à super-résolution sur la base de plus qu'une seule image d'entrée à faible résolution, l'homme de l'art saura facilement comment les techniques décrites peuvent être appliquées au cas d'une seule image d'entrée à faible résolution. Par exemple, dans le cas d'une seule image, les pixels candidats sont choisis comme étant tous ceux de l'image d'entrée. En variante, la taille de la fenêtre de recherche est déterminée sur la base des caractéristiques de l'image.

## Revendications

1. Procédé pour générer une image à super-résolution ($I_{SR}$) par un dispositif de traitement (902), le procédé comprenant les étapes suivantes :

    sur-échantillonner une image d'entrée (102) pour générer une image sur-échantillonnée (302) ; et

    modifier la valeur de pixel d'un premier pixel de l'image sur-échantillonnée par les étapes suivantes :

génération d'une valeur de similarité pour chacun d'une pluralité de pixels candidats dans l'image d'entrée et/ou dans une ou plusieurs autres images d'entrée (308), les pixels candidats étant choisis sur la base de la position du premier pixel dans l'image sur-échantillonnée, la valeur de similarité étant générée en évaluant la similarité d'un groupe de pixels environnants de chacun des pixels candidats avec un groupe de pixels environnants du premier pixel ;

sélection d'un premier sous-ensemble de pixels candidats sur la base des valeurs de similarité ; et

génération de la valeur de pixel modifiée du premier pixel sur la base des valeurs de pixels et des valeurs de similarité du premier sous-ensemble de pixels candidats.

2. Procédé selon la revendication 1, dans lequel la sélection du premier sous-ensemble des pixels candidats comprend la sélection d'une pluralité de pixels candidats ayant les valeurs de similarité les plus élevées.

3. Procédé selon la revendication 1 ou 2, dans lequel la sélection du premier sous-ensemble des pixels candidats comprend la comparaison de la valeur de similarité de chaque pixel candidat à une valeur de seuil, et la sélection de chaque pixel candidat sur la base de la comparaison.

4. Procédé selon l'une quelconque des revendications 1 à 3, comprenant en outre la modification de la valeur de pixel d'un deuxième pixel de l'image sur-échantillonnée par les étapes suivantes :

sélection, sur la base de la position du deuxième pixel dans l'image sur-échantillonnée, d'une pluralité d'autres pixels candidats dans l'image d'entrée et/ou dans une ou plusieurs autres images d'entrée ;

génération d'une valeur de similarité pour chaque autre pixel candidat en évaluant la similarité entre un groupe de pixels environnants du deuxième pixel et un groupe de pixels environnants de chacun des autres pixels candidats ; et

génération de la valeur de pixel modifiée du deuxième pixel sur la base des valeurs de pixel et des valeurs de similarité de tous les autres pixels candidats.

5. Procédé selon l'une quelconque des revendications 1 à 3, comprenant en outre la modification de la valeur de pixel d'un deuxième pixel de l'image sur-échantillonnée par les étapes suivantes :

sélection, sur la base de la position du deuxième pixel dans l'image sur-échantillonnée, d'une pluralité d'autres pixels candidats dans l'image d'entrée et/ou dans une ou plusieurs autres images d'entrée ;

génération d'une valeur de similarité pour chaque autre pixel candidat en évaluant la similarité entre un groupe de pixels environnants du deuxième pixel et un groupe de pixels environnants de chacun des autres pixels candidats ;

sélection d'un deuxième sous-ensemble des autres pixels candidats, le deuxième sous-ensemble contenant plus de pixels candidats que le premier sous-ensemble ; et

génération de la valeur de pixel modifiée du deuxième pixel sur la base du pixel et des valeurs de similarité de tous les pixels du deuxième sous-ensemble de pixels candidats.

6. Procédé selon la revendication 4 ou 5, comprenant en outre les étapes suivantes :

détermination de zones uniformes et non uniformes dans l'image sur-échantillonnée, le premier pixel étant déterminé comme tombant dans une zone non uniforme et le deuxième pixel étant déterminé comme tombant dans une zone uniforme ; et

modification de la valeur de pixel d'un troisième pixel sur la base de pixels candidats sélectionnés sur la base du fait qu'il tombe dans une zone uniforme ou non uniforme.

7. Procédé selon la revendication 6, dans lequel la détermination des zones uniformes et non uniformes comprend la détermination d'une valeur d'uniformité ($h_k$) pour au moins un bloc de pixels de ladite image sur la base de l'équation suivante :

$$h_k = \left| \det(A_k) - \alpha . \left[ trace(A_k) \right]^2 \right|$$

où $A_k$ est la matrice de covariance du bloc de pixels, det ($A_k$) est le déterminant de la matrice $A_k$, trace ($A_k$) est la trace de la matrice $A_k$, et $\alpha$ est une constante.

**8.** Procédé selon l'une quelconque des revendications 1 à 7, dans lequel la valeur de pixel modifiée du premier pixel est générée en calculant une moyenne pondérée des valeurs de pixel des pixels candidats en pondérant les valeurs de pixel des pixels candidats du sous-ensemble sur la base des valeurs de similarité et en additionnant les valeurs de pixel pondérées.

**9.** Procédé selon la revendication 8, dans lequel la valeur de pixel modifiée du premier pixel est générée sur la base de la formule suivante :

$$x_i = \frac{\sum\limits_{y_j \in \Omega(i)} w_{ij} y_j}{\sum\limits_{y_j \in \Omega(i)} w_{ij}}$$

où $w_{ij}$ est la valeur de similarité du pixel candidat $y_j$, et $x_i{}^*$ est la valeur de pixel modifiée.

**10.** Procédé selon l'une quelconque des revendications 1 à 7, dans lequel la valeur de pixel modifiée du premier pixel est générée en déterminant une médiane pondérée des valeurs de pixel des pixels candidats sur la base d'une somme cumulée des valeurs de similarité de pixels candidats ayant des valeurs de pixel au-dessus et/ou en-dessous de la médiane pondérée.

**11.** Procédé selon la revendication 10, dans lequel la valeur de pixel modifiée du premier pixel est générée sur la base de la formule suivante :

$$\sum\limits_{y_j \leq x_i^*} w_{ij} = A \sum\limits_{y_j \geq x_i^*} w_{ij}$$

où A est une constante, $w_{ij}$ est la valeur de similarité du pixel candidat $y_j$, et $x_i{}^*$ est la valeur de pixel modifiée.

**12.** Procédé selon l'une quelconque des revendications 1 à 11, comprenant en outre une réduction de taille de l'image sur-échantillonnée afin de générer les pixels environnants du premier pixel.

**13.** Procédé selon l'une quelconque des revendications 1 à 12, dans lequel les valeurs de similarité sont déterminées sur la base du calcul suivant :

$$W_{ij} = \exp\left(-\frac{d_E^2(Px_i, Py_j)}{2\sigma_w^2}\right)$$

où $\sigma_w$ est une constante, $d_E^2$ est la distance euclidienne au carré, $Px_i$ est le groupe de pixels environnants du premier pixel et $Py_i$ est le groupe de pixels environnants de chacun des pixels candidats.

**14.** Dispositif pour générer une image à super-résolution comprenant un dispositif de traitement agencé pour :

sur-échantillonner une image d'entrée ; et

modifier la valeur de pixel d'un premier pixel de l'image sur-échantillonnée par les étapes suivantes :

génération d'une valeur de similarité pour chacun d'une pluralité de pixels candidats dans l'image d'entrée et/ou dans une ou plusieurs autres images d'entrée, choisis sur la base de la position du premier pixel dans l'image sur-échantillonnée, la valeur de similarité étant générée en évaluant la similarité d'un groupe de pixels environnants de chacun des pixels candidats avec un groupe de pixels environnants du premier pixel ;

sélection d'un sous-ensemble de pixels candidats sur la base des valeurs de similarité ; et
génération de la valeur de pixel modifiée du premier pixel sur la base des valeurs de pixels et des valeurs de similarité du premier sous-ensemble de pixels candidats.

15. Support lisible par un ordinateur mémorisant un programme d'ordinateur qui, lorsqu'il est exécuté par un dispositif de traitement, amène la mise en oeuvre du procédé de l'une quelconque des revendications 1 à 13.

**Patentansprüche**

1. Ein Verfahren zum Generieren eines Superauflösungsbildes bzw. $I_{SR}$ ($I_{SR}$ = super-resolution image) durch eine Verarbeitungseinrichtung (902), wobei das Verfahren die folgenden Schritte aufweist:

   Aufwärtsskalieren eines Eingabebildes (102) zum Generieren eines aufwärtsskaliertes Bildes (302); und

   Modifizieren des Pixelwertes eines ersten Pixels des aufwärtsskalierten Bildes durch:

   Generieren eines Ähnlichkeitswertes für jeden einer Vielzahl von Kandidatenpixeln in dem Eingabebild und/oder in einem oder mehreren weiteren Eingabebildern (308), wobei die Kandidatenpixel basierend auf der Position des ersten Pixels in dem aufwärtsskalierten Bild ausgewählt werden, wobei der Ähnlichkeitswert generiert wird durch Evaluieren der Ähnlichkeit einer Gruppe von umgebenden Pixeln jedes der Kandidatenpixel mit einer Gruppe von umgebenden Pixeln des ersten Pixels;
   Auswählen eines ersten Subsatzes der Kandidatenpixel basierend auf den Ähnlichkeitswerten; und
   Generieren des modifizierten Pixelwertes des ersten Pixels basierend auf den Pixelwerten und den Ähnlichkeitswerten des ersten Subsatzes von Kandidatenpixeln.

2. Verfahren nach Anspruch 1, wobei das Auswählen des ersten Subsatzes der Kandidatenpixel Auswählen einer Vielzahl von Kandidatenpixeln, die die höchsten Ähnlichkeitswerte haben, aufweist.

3. Verfahren nach Anspruch 1 oder 2, wobei das Auswählen des ersten Subsatzes der Kandidatenpixel Vergleichen des Ähnlichkeitswertes jedes Kandidatenpixels mit einem Schwellenwert und Auswählen jedes Kandidatenpixels basierend auf dem Vergleich aufweist.

4. Verfahren nach einem der Ansprüche 1 bis 3, das weiter Modifizieren des Pixelwertes eines zweiten Pixels des aufwärtsskalierten Bildes aufweist durch:

   Auswählen, basierend auf der Position des zweiten Pixels in dem aufwärtsskalierten Bild, einer Vielzahl von weiteren Kandidatenpixeln in dem Eingabebild und/oder in einem oder mehreren weiteren Eingabebildern;
   Generieren eines Ähnlichkeitswertes für jeden weiteren Kandidatenpixel durch Evaluieren der Ähnlichkeit zwischen einer Gruppe von umgebenden Pixeln des zweiten Pixels und einer Gruppe von umgebenden Pixeln für jeden der weiteren Kandidatenpixel; und
   Generieren des modifizierten Pixelwertes des zweiten Pixels basierend auf dem Pixel und Ähnlichkeitswerten aller der weiteren Kandidatenpixel.

5. Verfahren nach einem der Ansprüche 1 bis 3, das weiter Modifizieren des Pixelwertes eines zweiten Pixels des aufwärtsskalierten Bildes aufweist durch:

   Auswählen, basierend auf der Position des zweiten Pixels in dem aufwärtsskalierten Bild, einer Vielzahl von weiteren Kandidatenpixeln in dem Eingabebild und/oder einem oder mehreren weiteren Eingabebildern;
   Generieren eines Ähnlichkeitswertes für jedes weitere Kandidatenpixel durch Evaluieren der Ähnlichkeit zwischen einer Gruppe von umgebenden Pixeln des zweiten Pixels und einer Gruppe von umgebenden Pixeln jedes der weiteren Kandidatenpixel;
   Auswählen eines zweiten Subsatzes der weiteren Kandidatenpixel, wobei der zweite Subsatz mehr Kandidatenpixel enthält als der erste Subsatz; und
   Generieren des modifizierten Pixelwertes des zweiten Pixels basierend auf dem Pixel und Ähnlichkeitswerten aller des zweiten Subsatzes von Kandidatenpixeln.

6. Verfahren nach Anspruch 4 oder 5, das weiter Folgendes aufweist:

Bestimmen einheitlicher bzw. gleichförmiger und nicht einheitlicher bzw. nicht gleichförmiger Zonen in dem aufwärtsskalierten Bild, wobei bestimmt wird, dass das erste Pixel in eine nicht einheitliche Zone fällt, und bestimmt wird, dass das zweite Pixel in eine einheitliche Zone fällt; und
Modifizieren des Pixelwertes eines dritten Pixels basierend auf Kandidatenpixeln, die ausgewählt werden basierend darauf, ob sie in eine einheitliche oder nicht einheitliche Zone fallen.

7. Verfahren nach Anspruch 6, wobei das Bestimmen einheitlicher und nicht einheitlicher Zonen Bestimmen eines Einheitlichkeits- bzw. Gleichförmigkeitswertes ($h_k$) für wenigstens einen Block von Pixeln des Bildes basierend auf der folgenden Gleichung aufweist:

$$h_k = \left| \det(A_k) - \alpha . \left[ trace(A_k) \right]^2 \right|$$

wobei $A_k$ die Kovarianzmatrix des Blockes von Pixeln ist, det ($A_k$) die Determinante der Matrix $A_k$ ist, trace ($A_k$) die Spur der Matrix $A_k$ ist und $\alpha$ eine Konstante ist.

8. Verfahren nach einem der Ansprüche 1 bis 7, wobei der modifizierte Pixelwert des ersten Pixels durch Berechnen eines gewichteten Mittelwertes der Pixelwerte der Kandidatenpixel erzeugt wird, und zwar durch Gewichten der Pixelwerte der Kandidatenpixel des Subsatzes basierend auf den Ähnlichkeitswerten, und durch Summieren der gewichteten Pixelwerte.

9. Verfahren nach Anspruch 8, wobei der modifizierten Pixelwert des ersten Pixels generiert wird basierend auf der folgenden Formel:

$$x_i = \frac{\sum\limits_{y_j \in \Omega(i)} w_{ij} y_j}{\sum\limits_{y_j \in \Omega(i)} w_{ij}}$$

wobei $w_{ij}$ der Ähnlichkeitswert des Kandidatenpixels $y_j$ ist und $x_i^*$ der modifizierte Pixelwert ist.

10. Verfahren nach einem der Ansprüche 1 bis 7, wobei der modifizierte Pixelwert des ersten Pixels generiert wird durch Bestimmen eines gewichteten Medians der Pixelwerte der Kandidatenpixel basierend auf einer kumulativen Summe der Ähnlichkeitswerte der Kandidatenpixel mit Pixelwerten über und/oder unter dem gewichteten Median.

11. Verfahren nach Anspruch 10, wobei der modifizierte Pixelwert des ersten Pixels generiert wird basierend auf der folgenden Formel:

$$\sum\limits_{y_j \leq x_i^*} w_{ij} = A . \sum\limits_{y_j \geq x_i^*} w_{ij}$$

wobei A eine Konstante ist, $w_{ij}$ der Ähnlichkeitswert des Kandidatenpixels $y_j$ ist und $x_i^*$ der modifizierte Pixelwert ist.

12. Verfahren nach einem der Ansprüche 1 bis 11, das weiter Abwärtsskalieren des aufwärtsskalierten Bildes aufweist, um die umgebenden Pixel des ersten Pixels zu generieren.

13. Verfahren nach einem der Ansprüche 1 bis 12, wobei die Ähnlichkeitswerte basierend auf der folgenden Berechnung bestimmt werden:

$$W_{ij} = \exp\left( -\frac{d_E^2 \left( Px_i , Py_j \right)}{2\sigma_w^2} \right)$$

wobei $\sigma_w$ eine Konstante ist, $d_E^2$ der quadrierte euklidische Abstand ist, $Px_i$ die Gruppe umgebender Pixel des ersten Pixels ist und $Py_i$ die Gruppe umgebender Pixel jedes der Kandidatenpixel ist.

14. Eine Einrichtung zum Generieren eines Superauflösungsbildes, die eine Verarbeitungseinrichtung aufweist, die konfiguriert ist zum:

   Aufwärtsskalieren eines Eingabebildes; und

   Modifizieren des Pixelwertes eines ersten Pixels des aufwärtsskalierten Bildes durch:

   Generieren eines Ähnlichkeitswertes für jeden einer Vielzahl von Kandidatenpixeln in dem Eingabebild und/oder in einem oder mehreren weiteren Eingabebildern, die basierend auf der Position des ersten Pixels in dem aufwärtsskalierten Bild ausgewählt werden, wobei der Ähnlichkeitswert generiert wird durch Evaluieren der Ähnlichkeit einer Gruppe von umgebenden Pixeln jedes der Kandidatenpixel mit einer Gruppe von umgebenden Pixeln des ersten Pixels;
   Auswählen eines Subsatzes der Kandidatenpixel basierend auf den Ähnlichkeitswerten; und
   Generieren des modifizierten Pixelwertes des ersten Pixels basierend auf den Pixelwerten und den Ähnlichkeitswerten des Subsatzes von Kandidatenpixeln.

15. Ein computerlesbares Medium, das ein Computerprogramm speichert, das, wenn es durch eine Verarbeitungseinrichtung ausgeführt wird, veranlasst, dass das Verfahren nach einem der Ansprüche 1 bis 13 implementiert wird.

**Claims**

1. A method of generating a super-resolution image ($I_{SR}$) by a processing device (902), the method comprising the following steps:

   up-scaling an input image (102) to generate an up-scaled image (302); and

   modifying the pixel value of a first pixel of the up-scaled image by:

   generating a similarity value for each of a plurality of candidate pixels in said input image and/or in one or more further input images (308), the candidate pixels being chosen based on the position of said first pixel in said up-scaled image, the similarity value being generated by evaluating the similarity of a group of surrounding pixels of each of said candidate pixels with a group of surrounding pixels of said first pixel;
   selecting a first subset of said candidate pixels based on said similarity values; and
   generating the modified pixel value of said first pixel based on the pixel values and similarity values of said first subset of candidate pixels.

2. The method of claim 1, wherein selecting said first subset of the candidate pixels comprises selecting a plurality of the candidate pixels having the highest similarity values.

3. The method of claim 1 or 2, wherein selecting said first subset of the candidate pixels comprises comparing the similarity value of each candidate pixel with a threshold value, and selecting each candidate pixel based on said comparison.

4. The method of any of claims 1 to 3, further comprising modifying the pixel value of a second pixel of the up-scaled image by:

   selecting, based on the position of said second pixel in said up-scaled image, a plurality of further candidate pixels in said input image and/or in one or more further input images;
   generating a similarity value for each further candidate pixel by evaluating the similarity between a group of surrounding pixels of said second pixel and a group of surrounding pixels of each of said further candidate pixels; and
   generating the modified pixel value of said second pixel based on the pixel and similarity values of all of said further candidate pixels.

5. The method of any of claims 1 to 3, further comprising modifying the pixel value of a second pixel of the up-scaled image by:

selecting, based on the position of said second pixel in said up-scaled image, a plurality of further candidate pixels in said input image and/or in one or more further input images;
generating a similarity value for each further candidate pixel by evaluating the similarity between a group of surrounding pixels of said second pixel and a group of surrounding pixels of each of said further candidate pixels;
selecting a second subset of said further candidate pixels, said second subset containing more candidate pixels than said first subset; and
generating the modified pixel value of said second pixel based on the pixel and similarity values of all of said second subset of candidate pixels.

6. The method of claim 4 or 5, further comprising:

determining uniform and non-uniform zones in said up-scaled image, wherein said first pixel is determined to fall within a non-uniform zone, and said second pixel is determined to fall within a uniform zone; and
modifying the pixel value of a third pixel based on candidate pixels selected based on whether it falls within a uniform or non-uniform zone.

7. The method of claim 6, wherein determining said uniform and non-uniform zones comprises determining a uniformity value ($h_k$) for at least one block of pixels of said image based on the following equation:

$$h_k = \left| \det(A_k) - \alpha.\left[trace(A_k)\right]^2 \right|$$

where $A_k$ is the covariance matrix of the block of pixels, det ($A_k$) is the determinant of the matrix $A_k$, trace ($A_k$) is the trace of matrix $A_k$, and $\alpha$ is a constant.

8. The method of any of claims 1 to 7, wherein the modified pixel value of said first pixel is generated by calculating a weighted mean of the pixel values of the candidate pixels by weighting the pixel values of the candidate pixels of said subset based on the similarity values, and by summing the weighted pixel values.

9. The method of claim 8, wherein said modified pixel value of said first pixel is generated based on the following formula:

$$x_i = \frac{\sum_{y_j \in \Omega(i)} w_{ij} y_j}{\sum_{y_j \in \Omega(i)} w_{ij}}$$

where $w_{ij}$ is the similarity value of the candidate pixel $y_j$, and $x_i^*$ is said modified pixel value.

10. The method of any of claims 1 to 7, wherein the modified pixel value of said first pixel is generated by determining a weighted median of the pixel values of the candidate pixels based on a cumulative sum of the similarity values of candidate pixels having pixel values above and/or below said weighted median.

11. The method of claim 10, wherein the modified pixel value of said first pixel is generated based on the following formula:

$$\sum_{y_j \le x_i^*} w_{ij} = A. \sum_{y_j \ge x_i^*} w_{ij}$$

where A is a constant, $w_{ij}$ is the similarity value of the candidate pixel $y_j$, and $x_i^*$ is said modified pixel value.

12. The method of any of claims 1 to 11, further comprising down-scaling said up-scaled image in order to generate the surrounding pixels of said first pixel.

**13.** The method of any of claims 1 to 12, wherein said similarity values are determined based on the following calculation:

$$W_{ij} \; = \; \exp\left(-\; \frac{d_E^2\left(Px_i, \; Py_j\right)}{2\sigma_w^2}\right)$$

where $\sigma_w$ is a constant, $d_E^2$ is the Euclidean distance squared, $Px_i$ is the group of surrounding pixels of said first pixel and $Py_i$ is the group of surrounding pixels of each of said candidate pixels.

**14.** A device for generating a super-resolution image comprising a processing device configured to:

up-scale an input image; and

modify the pixel value of a first pixel of the up-scaled image by:

generating a similarity value for each of a plurality of candidate pixels in said input image and/or in one or more further input images chosen based on the position of said first pixel in said up-scaled image, the similarity value being generated by evaluating the similarity of a group of surrounding pixels of each of said candidate pixels with a group of surrounding pixels of said first pixel;
selecting a subset of said candidate pixels based on said similarity values; and
generating the modified pixel value of said first pixel based on the pixel values and similarity values of said subset of candidate pixels.

**15.** A computer-readable medium storing a computer program that, when executed by a processing device, causes the method of any of claims 1 to 13 to be implemented.

102

102

104

106

Fusion → Suppression de flou → $I_{SR}$

**Fig 1**

Recevoir une ou plusieurs images d'entrée — S1

Sur-échantillonner l'image d'entrée pour générer une image sur-éch. — S2

i = 0 — S3

Pour le pixel $x_i$ de l'image sur-éch. , calculer une valeur de similarité avec N pixels candidats de l'image ou des images d'entrée — S4

Sélectionner un sous-ensemble de pixels candidats — S5

Générer des valeurs de pixels modifiées $x_i$ sur la base des valeurs de pixels et des valeurs de similarité du sous-ensemble de pixels candidats pour chaque pixel $x_i$ — S6

S8

S7

i = i + 1 ← i = M ? → Fin

S9

**Fig 2**

Fig 3

Fig 4

Sous-échantillonner le bloc de pixels autour du pixel x$_i$
pour générer un pavé de référence

S4A

Calculer une valeur de similarité entre le pavé de référence
et le pavé entourant chaque pixel candidat

S4B

Fig 5

Recevoir une ou plusieurs images d'entrée — S1

Sur-échantillonner l'image d'entrée pour générer une image sur-échantillonnée — S2

Calculer des valeurs d'uniformité de l'image d'entrée — S3

Segmenter l'image sur-éch. en au moins des zones uniformes/non uniformes sur la base des valeurs d'uniformité — S4

$i = 0$ — S5

S6

Pixel $x_i$ dans zone non uniforme ?

N

O

S9

Calculer des valeurs de similarité pour N pixels candidats du pixel $x_i$ — S7

Calculer des valeurs de similarité pour N pixels candidats du pixel $x_i$

S10

Générer une valeur modifiée du pixel $x_i$ sur la base des valeurs de pixels et des valeurs de similarité de tous les candidats — S8

Sélectionner un sous-ensemble de pixels candidats

Générer une valeur modifiée du pixel $x_i$ sur la base des valeurs de pixels et des valeurs de similarité du sous-ensemble

S11

Incrémenter i et revenir en S6

$i = M$

O

Fin — S14

S13

S12

**Fig 7**

Fig 6

Fig 8

Fig 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090110285 A
- WO 2011092696 A
- EP 1860875 A

**Littérature non-brevet citée dans la description**

- A combined corner and edge detector. *Alvey Vision Conference,* 01 Janvier 1988, 147-151
- A combined corner and edge detector. **C. HARRYS ; M. STEPHENS.** Alvey Vision Conference. 147-151